# EUROPÄISCHE PATENTSCHRIFT

(11) **EP 1 024 878 B1**
(45) Veröffentlichungstag und Bekanntmachung des Hinweises auf die Patenterteilung: **11.09.2002**
(21) Anmeldenummer: 98947229.5
(22) Anmeldetag: 09.10.1998
(51) Int. Cl.: B01D 46/04, B01D 46/24

(54) **VERFAHREN UND VORRICHTUNG ZUM REINIGEN EINES STAUBABSCHEIDERS**
PROCESS AND DEVICE FOR CLEANING A DUST SEPARATOR
PROCEDE ET DISPOSITIF POUR NETTOYER UN DEPOUSSIEREUR

(30) Priorität: 17.10.1997 AT 176297
(43) Veröffentlichungstag der Anmeldung: 09.08.2000
(73) Patentinhaber: Kappa Arbeitsschutz & Umwelttechnik GmbH, 4400 Steyr (AT)
(72) Erfinder: TOJNER, Franz, A-3350 Haag (AT)
(74) Vertreter: Hübscher, Gerhard, Dipl.-Ing.
(86) Internationale Anmeldenummer: AT9800239
(87) Internationale Veröffentlichungsnummer: WO99020370

(56) Entgegenhaltungen:
- EP-A- 0 089 114
- DE-A- 2 550 918
- DE-C- 4 334 699
- FR-A- 2 740 702
- GB-A- 1 060 594

## Beschreibung

### Technisches Gebiet

Die Erfindung bezieht sich auf ein Verfahren zum Reinigen eines Staubabscheiders, der einen von oben nach unten durchströmten Rohgasschacht und quer zur Rohgasströmung in den Rohgasschacht ragende Filterelemente aufweist, durch die das Rohgas unter einer entsprechenden Staubabscheidung in einen Reingasschacht abgeleitet wird und die nacheinander zum Abblasen der auf ihnen abgesetzten Staubteilchen in den Rohgasschacht kurzzeitig mit Druckluft - beaufschlagt werden, wobei während der Druckluftbeaufschlagung der Filterelemente deren Strömungsverbindung zum Reingasschacht unterbrochen wird, sowie auf eine Vorrichtung zur Durchführung des Verfahrens.

### Stand der Technik

Bei Staubabscheidern mit einem Rohgasschacht, der an einen Reingasschacht angeschlossene Filterelemente, üblicherweise Filterpatronen, aufnimmt, strömt das in den Rohgasschacht eingeleitete, mit Staub beladene Rohgas durch die Filterflächen in die Filterelemente, von wo sie als Reingas über den gemeinsamen Reingasschacht abgesaugt werden. Um die Filterflächen von den beim Rohgasdurchtritt zurückgehaltenen Staubteilchen während des Filterbetriebes reinigen zu können, ist es bekannt, den Reingasschacht in bestimmten Zeitabständen kurzzeitig mit Druckluft zu beaufschlagen, so daß durch die Druckluftimpulse in den einzelnen Filterelementen die Staubteilchen von den Filterflächen der Filterelemente in den Rohgasschacht abgeblasen werden. Damit in diesem Zusammenhang die von den Filterelementen abgeblasenen Staubteilchen nicht entgegen dem üblicherweise von unten nach oben durch den Rohgasschacht geleiteten Rohgasstrom aus dem Rohgasschacht nach unten ausgetragen werden müssen, werden bei einem bekannten Staubabscheider die Filterelemente in horizontaler Ausrichtung gruppenweise übereinander angeordnet, so daß bei einer Rohgasströmung innerhalb des Rohgasschachtes von oben nach unten der abgeblasene Grobkornanteil des Staubes durch den Rohgasstrom nach unten gefördert werden kann. Dies ist möglich, weil der Grobkornanteil des Staubes beim Abblasen beschleunigt und aufgrund seiner Trägheit soweit von der Filterfläche wegbewegt wird, daß er bei der Strömungsumkehr durch den nach dem Druckluftimpuls wieder durch die Filterfläche strömenden Rohgasanteil nicht mehr an die gereinigte Filterfläche angelagert wird. Aufgrund des für die Bewegung des Feinanteils des Staubes maßgebenden Reibungsverhaltens, das durch eine niedrige Reynoldszahl (z. B. Re_{Partikel} < 30) charakterisiert wird, wird die Bewegung der feinen Staubteilchen im wesentlichen durch die Gasströmung bestimmt. Dies bedeutet, daß die durch den Druckluftimpuls von den Filterflächen nur in einem vergleichsweise geringen Ausmaß abgeblasenen feinen Staubteilchen mit dem Rohgasstrom im unmittelbaren Anschluß an die Druckluftimpulse wieder an die Filterflächen der Filterelemente angelagert werden, was zu einem wachsenden Druckverlust und damit zu einer sinkenden Filterleistung mit der Folge führt, daß nach bestimmten Betriebszeiten der Staubabscheider zum Reinigen der Filterelemente abgeschaltet werden muß. Mit einer Spülluftströmung durch die Filterelemente entgegen der Rohgasströmung kann bei fehlender Rohgasströmung naturgemäß auch der Feinstaubanteil von den Filterflächen der Filterelemente abgeblasen und aus dem Rohgasschacht ausgetragen werden, allerdings nicht während des Filterbetriebes.

Darüber hinaus ist es bekannt (DE 31 11 502 A1, DE 43 34 699 C1), die Filterelemente während der Druckluftbeaufschlagung vom Reingasschacht abzusperren. Vertikal übereinanderliegende Filterelemente werden dabei zu Gruppen zusammengefaßt, so daß sich im Bereich einer solchen vertikalen Filterelementgruppe keine Rohgasströmung von oben nach unten ausbilden kann. Erschwerend kommt hinzu, daß die Filterelemente, die seitlich neben den vertikal übereinanderliegenden, mit Druckluft beaufschlagten Filterelementen liegen, während der Druckluftbeaufschlagung der dazwischenliegenden Filterelemente ebenfalls vom Reingasschacht abgetrennt sind, was die Ausbildung einer Saugströmung im Bereich dieser nebengereihten Filterelemente verhindert. Dies bedeutet, daß lediglich der Grobkomanteil des abgeblasenen Staubes aufgrund einer entsprechenden Sinkgeschwindigkeit nach unten abtransportiert werden kann, nicht aber der Feinkomanteil, der beim nachfolgenden Anschließen der Filterelemente an den Saugzug des Reingasschachtes wieder an die Filterelemente angesogen wird.

Schließlich ist es bekannt (FR 2 740 702 A1), von den in vertikalen und horizontalen Reihen angeordneten Filterelmenten jeweils eine durch eine vertikale Filterelementreihe gebildete Filterelementgruppe über einen horizontal verfahrbaren Schlitten anzusteuern und nacheinander von oben nach unten aufeinanderfolgend von der Seite des Reingasschachtes her mit Druckluft zu beaufschlagen. Da der Rohgasanschluß im unterem Bereich des die Filterelemente aufnehmenden Rohgasschachtes mündet, fehlt im Bereich der jeweiligen vertikalen Filterelementgruppe eine den Feinkornanteil des abgeblasenen Staubes mitnehmende Rohgasströmung im Bereich der mit Druckluft beaufschlagten Filterelemente, was wiederum zu einer unbefriedigenden Reinigung der Filterelemente führt.

### Darstellung der Erfindung

Der Erfindung liegt somit die Aufgabe zugrunde, diese Mängel zu vermeiden und ein Verfahren zum Reinigen eines Staubabscheiders der eingangs geschilderten Art so auszugestalten, daß eine weitgehende Reinigung der Filterelemente auch vom Feinstaubanteil während des Filterbetriebes möglich wird.

Die Erfindung löst die gestellte Aufgabe dadurch, daß während der Unterbrechung der Strömungsverbindung zwischen den zu reinigenden Filterelementen und dem Reingasschacht die vom Reingasschacht abgesperrten Filterelemente vom eine von oben nach unten gerichtete Strömungskomponente aufweisenden Rohgasstrom umströmt werden.

Da zufolge dieser Maßnahmen die vom Reingasschacht abgesperrten Filterelemente in einem von oben nach unten gerichteten Rohgasstrom verbleiben, werden nicht nur die aufgrund ihrer größeren Trägheit in einem größeren Abstand abgeschleuderten Grobstaubanteile, sondern auch die Feinstaubanteile im unmittelbaren Filterflächenbereich durch den Rohgasstrom nach unten mitgenommen, was die angestrebte Reinigung der Filterelemente sicherstellt, weil die Feinstaubanteile beim Anschluß der gereinigten Filterelemente an den Reingasschacht nicht mehr an die Filterelemente angesaugt werden.

Es empfiehlt sich daher, bei einer Anordnung der Filterelemente zumindest gruppenweise übereinander, die Filterelemente nacheinander von oben nach unten mit Druckluft zu beaufschlagen, so daß die Filterelemente von oben nach unten fortschreitend während des Filterbetriebes gereinigt werden. Wegen der sich im Bereich der untersten Filterelemente verringernden Abwärtsströmung des Rohgases kann sich die geschilderte Reinigungswirkung bei den untersten Filterelementen nur unvollständig ausbilden. Bei diesen untersten Filterelementen muß daher mit einer höheren Staubbelastung gerechnet werden, was sich jedoch auf die gesamte Filterleistung in einem nur vergleichsweise geringen Ausmaß auswirkt.

Wie bereits ausgeführt wurde, ist es für die Erfindung von maßgebender Bedeutung, daß die Rohgasströmung die während der Druckbeaufschlagung der Filterelemente abgeblasenen Staubteilchen von der gereinigten Filterfläche wegfördert, so daß beim Öffnen der Strömungsverbindung zwischen dem Reingasschacht und den für die Druckluftbeaufschlagung gesperrten Filterelementen die nunmehr wieder durch die offenen Filterelemente strömenden Rohgasanteile die abgeblasenen Staubteilchen nicht mehr an den gereinigten Filterflächen ablagern können. Um diese Forderung auch bei einer Nebeneinanderreihung der Filterelemente erfüllen zu können, wird der Rohgasstrom durch Trennwände zwischen den Filterelementen in den Filterelementen zumindest gruppenweise zugeordnete Teilströme unterteilt, die für einen Weitertransport der von den Filterelementen abgeblasenen Staubteilchen nach unten sorgen. In diesem Zusammenhang ist nämlich zu berücksichtigen, daß sich trotz der Absperrung eines Filterelementes zwischen den dieses Filterelement gegenüber den nebengereihten Filterelementen strömungstechnisch abgrenzenden Trennwänden eine Rohgasströmung einstellen wird, wenn die Trennwände nach unten offene Strömungskanäle bilden, wie dies für den Austrag der abgeblasenen Staubteilchen ja zwingend erforderlich ist. Im Bereich der unten miteinander strömungstechnisch verbundenen Strömungskanäle ergibt sich nämlich im Vergleich zur oberen Zuströmseite dieser Kanäle ein Unterdruck, der im Bereich des abgesperrten Filterelementes eine Rohgasströmung von oben nach unten bedingt.

Um die Reinigungswirkung durch eine Druckluftbeaufschlagung der Filterelemente zu verbessern, können die vom Reingasschacht abgesperrten Filterelemente mit wenigstens zwei aufeinanderfolgenden Druckluftimpulsen beaufschlagt werden, so daß durch die nachfolgenden Druckluftimpulse noch an den Filterelementen anhaftende Staubteilchen ebenfalls von den Filterflächen abgeblasen werden können. Die Zeit der Absperrung der Filterelemente ist dabei auf die sich während der Absperrung einstellende, die Filterelemente von oben nach unten umspülende Rohgasströmung abzustimmen, um einen ausreichenden Staubteilchentransport sicherzustellen.

Zur Durchführung des erfindungsgemäßen Verfahrens kann von einem bekannten Staubabscheider ausgegangen werden, der mit einem oben einen Rohgasanschluß aufweisenden Rohgasschacht, in den quer zur Rohgasströmung angeordnete Filterelemente ragen, die an einen mit einem Sauggebläse verbundenen Reingasschacht angeschlossen sind, mit einer Druckluftquelle zur gruppenweisen Versorgung der Filterelemente mit Druckluftimpulsen, mit wenigstens einer Absperreinrichtung zum aufeinanderfolgenden Verschließen der Strömungsanschlüsse der Filterelementgruppen an den Reingasschacht und mit wenigstens einem Ventil für den Anschluß der Filterelemente an die Druckluftquelle versehen ist. Bei einem solchen Staubabscheider werden die Filterelement gruppen übereinander angeordnet, um durch ein gruppenweises Abblasen des Staubes von den Filterelementen in den Rohgasstrom die angestrebte Reinigung sicherzustellen, weil ja der von oben nach unten gerichtete Rohgasstrom über die nicht vom Reingasschacht abgesperrten Filterelementgruppen aufrecht bleibt.

Werden die Filterelemente im Rohgasschacht nicht gruppenweise übereinander angeordnet, sondern nebeneinandergereiht, so ist der Rohgasschacht durch Trennwände zumindest zwischen Filterelementgruppen in oben und unten offene Strömungskanäle zu unterteilen, um eine Rohgasströmung mit einer ausgeprägten. Strömungskomponente von oben nach unten zu ermöglichen. Aufgrund der unteren Strömungsverbindung der Strömungskanäle wird im Strömungskanal mit dem abgesperrten Filterelement bzw. der abgesperrten Filterelementgruppe eine Druckdifferenz wirksam, die trotz der fehlenden Rohgasabsaugung durch das Filterelement bzw. die Filterelementgruppe zu einer für die Mitnahme der abgeblasenen Staubteilchen ausreichenden, nach unten gerichteten Rohgasströmung führt.

Sollen die Filterelemente innerhalb von Gruppen gemeinsam betätigt werden, so braucht nicht jedes Filterelement mit einer gesonderten Absperreinrichtung bzw. einem gesonderten Ventil für den Druckluftanschluß versehen zu werden. Es können nämlich die zu Gruppen zusammengefaßten Filterelemente gruppenweise in einen Sammelkanal münden, der einerseits über eine Absperreinrichtung an den Reingasschacht und anderseits über ein Ventil an die Druckluftquelle angeschlossen ist. Mit einer solchen Maßnahme vereinfacht sich die Konstruktion des Staubabscheiders erheblich.

Die zu übereinander angeordneten Gruppen zusammengefaßten oder nebeneinandergereihten Filterelemente erlauben aber auch eine andere einfache Konstruktion, die darin besteht, daß den Filterelementen bzw. den Filterelementgruppen ein im Reingasschacht geführter, von Filterelement zu Filterelement bzw. von Filterelementgruppe zu Filterelementgruppe verlagerbarer Schlitten zugeordnet ist, der eine anstellbare Absperreinrichtung für ein Filterelement bzw. eine Filterelementgruppe und einen über ein Ventil steuerbaren, innerhalb der Absperreinrichtung mündenden. Druckluftanschluß für die Druckluftquelle aufweist. Über diesen Schlitten können somit die Filterelemente einzeln oder gruppenweise abgesperrt und mit Druckluft beaufschlagt werden, so daß zum aufeinanderfolgenden Reinigen der Filterelementgruppen lediglich der Schlitten von Filterelement zu Filterelement bzw. von Filterelementgruppe zu Filterelementgruppe verschoben werden muß. Bei übereinander angeordneten Filterelementen ist der Schlitten von oben nach unten, bei nebeneinandergereihten Filterelementen entlang der Filterelementreihe zu verfahren. Die Absperreinrichtung für die Filterelemente einer Gruppe kann dabei vergleichsweise einfach über einen allen Filterelementen einer Gruppe gemeinsamen Verschluß bestehen, der dichtend gegen die Zwischenwand zwischen dem Reingasschacht und dem Rohgasschacht angedrückt wird. Durch diese Zwischenwand ragen ja die Filterelemente in den Rohgasschacht.

Um den Abtransport der von den Filterflächen der abgesperrten Filterelemente abgeblasenen Staubteilchen zu unterstützen, kann dem Rohgasschacht wenigstens ein in Abhängigkeit von der Betätigung der Absperreinrichtung einschaltbares Gebläse für den Rohgasstrom zugeordnet werden, so daß die Rohgasströmung während der Absperrung eines Filterelementes zumindest im Bereich dieses Filterelementes durch das Gebläse verstärkt wird.

### Kurze Beschreibung der Zeichnungen

Anhand der Zeichnung wird das erfindungsgemäße Verfahren näher erläutert. Es zeigen
- Fig. 1: einen erfindungsgemäßen Staubabscheider in einem vereinfachten Vertikalschnitt,
- Fig. 2: einen Schnitt nach der Linie II-II der Fig. 1,
- Fig. 3: einen Schnitt nach der Linie III-III der Fig. 1,
- Fig. 4: einen Vertikalschnitt durch eine abgewandelte Ausführungsform eines erfindungsgemäßen Staubabscheiders,
- Fig. 5: den Staubabscheider gemäß der Fig. 4 in einem Schnitt nach der Linie V-V der Fig. 4,
- Fig. 6: einen Schnitt nach der Linie VI-VI der Fig. 4,
- Fig. 7: einen Schnitt nach der Linie VII-VII der Fig. 4 in einem größerem Maßstab,
- Fig. 8: einen erfindungsgemäßen Staubabscheider gemäß einer weiteren Ausführungsform in einem Vertikalschnitt,
- Fig. 9: einen Schnitt nach der Linie IX-IX der Fig. 8 und
- Fig. 10: einen Schnitt nach der Linie X-X der Fig. 9.

### Wege zur Ausführung der Erfindung

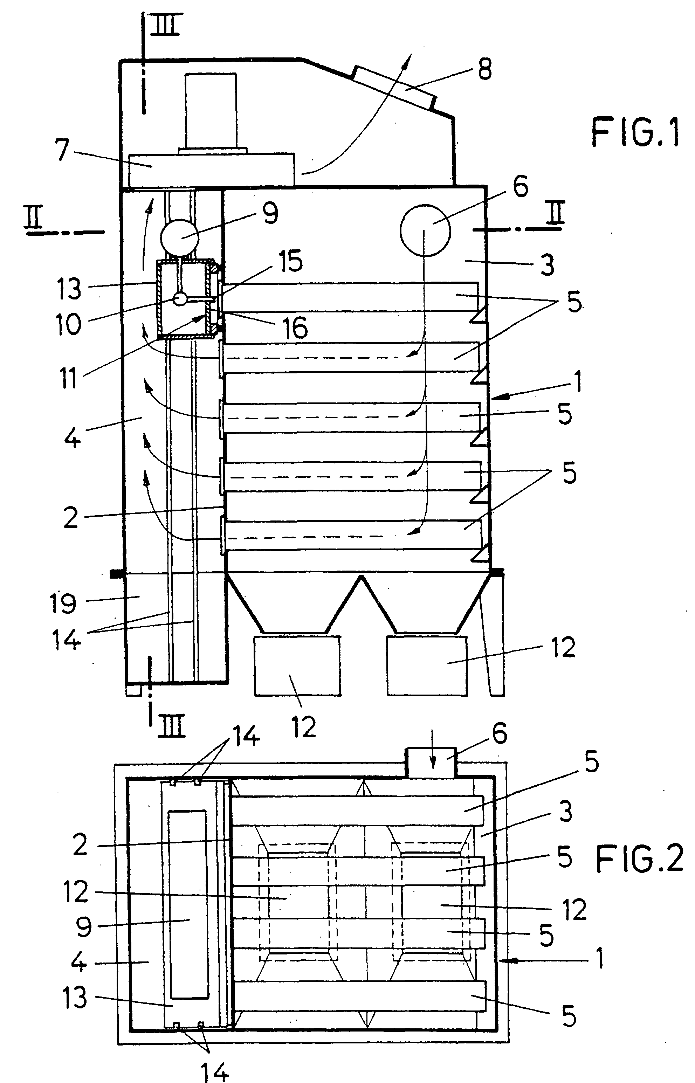

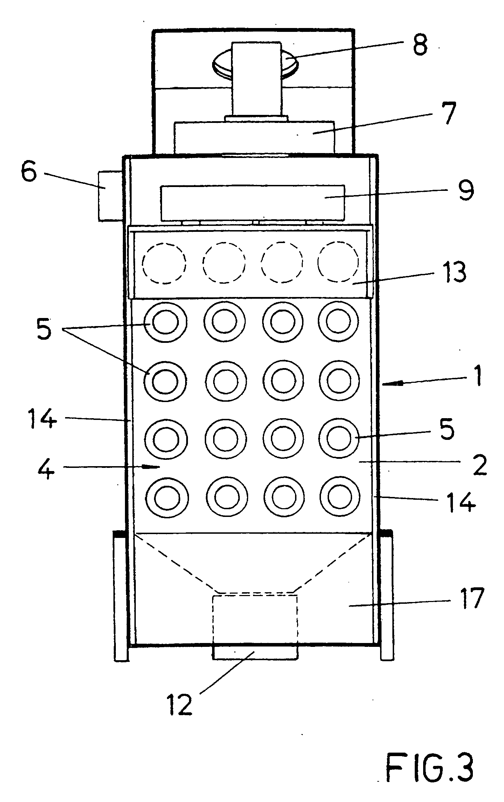

Der Staubabscheider gemäß dem Ausführungsbeispiel nach den Fig. 1 bis 3 besteht im wesentlichen aus einem Gehäuse 1, das durch eine Zwischenwand 2 in einen Rohgasschacht 3 und einen Reingasschacht 4 unterteilt ist. Durch die Zwischenwand 2 sind vom Reingasschacht 4 her in den Rohgasschacht 3 Filterelemente 5 eingesetzt, die in Reihen übereinander angeordnet sind und beispielsweise aus Filterpatronen bestehen. Es kommt jedoch nicht auf die Form der Filterelemente 5 an, sondern lediglich darauf, daß der Rohgasstrom, der durch einen oberen Rohgasanschluß 6 in den Rohgasschacht 3 eintritt, nur durch die die Filterelemente 5 umschließenden Filterflächen in die Filterelemente 5 und durch die Filterelemente 5 in den Reingasschacht 4 gelangen kann, von wo der Reingasstrom über ein Sauggebläse 7 abgezogen wird, um das Gehäuse 1 durch einen Reingasaustritt 8 zu verlassen. Beim Durchtritt der ) Rohgasströmung durch die Filterflächen der Filterelemente 5 wird der Staubanteil durch die Filterflächen zurückgehalten, die somit durch den abgelagerten Staubanteil zunehmend verlegt werden. Aus diesem Grunde sind die Filterflächen der Filterelemente 5 in bestimmten Zeitabständen zu reinigen. Die zeitlichen Abstände zwischen diesen Filterreinigungen können in Abhängigkeit von den jeweils auftretenden Druckverlusten gewählt werden, wenn mit einer stark schwankenden Staubbelastung der Rohgase zu rechnen ist. Bei annähernd gleichbleibender Staubbelastung der Rohgase kann die Filterreinigung auch in vorgegebenen Zeitabständen durchgeführt werden.

Um bei der Filterreinigung den Filterbetrieb nicht unterbrechen zu müssen, werden die Filterelemente 5 reihenweise zu Gruppen zusammengefaßt, und gruppenweise mit einer Druckluftquelle 9, beispielsweise einem Druckluftbehälter, über ein Ventil 10 kurzzeitig verbunden, so daß durch die in den Filterelementen 5 wirksam werdenden Druckluftimpulse die angelagerten Staubteilchen von den Filterflächen entgegen der Rohgasströmung abgeblasen werden. Während der kurzzeitigen Druckbeaufschlagung der Filterelemente 5 wird die Strömungsverbindung zwischen den Filterelementen 5 und dem Reingasschacht 4 unterbrochen, und zwar mit Hilfe einer Absperreinrichtung 11, so daß die nur geringfügig von den Filterflächen abgeblasenen Feinstaubteilchen vom wegen der Absperrung der Filterelemente 5 außen um die Filterelemente 5 strömenden Rohgasstrom mitgenommen und von den Filterflächen der abgesperrten Filterelemente 5 mit der Wirkung weggefördert werden, daß nach dem Öffnen der Absperreinrichtung 11 die abgeblasenen Staubteilchen mit den nunmehr wieder durch die vorher abgesperrten Filterelemente 5 strömenden Rohgasteilströmen nicht mehr zu den gereinigten Filterftächen getragen werden können. Da das Rohgas den Rohgasschacht 3 von oben nach unten durchströmt, werden die von den gesperrten Filterelementen 5 einer Reihe abgeblasenen Staubteilchen nach unten gefördert, wobei sie sich zum Teil an die Filterflächen der Filterelemente 5 der darunter liegenden Filterelementreihen anlagern. Werden daher die Filterelemente 5 reihenweise von oben nach unten nacheinander in der beschriebenen Weise gereinigt, so werden die von den Filterflächen der Filterelemente 5 abgeblasenen Staubteilchen im Rohgasschacht 3 schrittweise nach unten gefördert, bis sie sich im Bodenbereich des Rohgasschachtes 3 in Staubsammelbehältern 12 absetzen. Entscheidend für die Filterreinigung bei einer solchen Anordnung der Filterelemente 5 ist somit, daß die Filterelemente 5 nacheinander von oben nach unten fortschreitend zumindest gruppenweise bei gesperrter Rohgasströmung durch die Filterelemente 5 abgeblasen werden.

Zur konstruktiven Lösung dieser Aufgabe ist gemäß dem Ausführungsbeispiel nach den Fig. 1 bis 3 ein Schlitten 13 vorgesehen, der im Reingasschacht 4 auf einer Vertikalführung 14 der Höhe nach verschiebbar gelagert ist. Dieser Schlitten 13 trägt die Absperreinrichtung 11 für die Filterelemente 5 einer Filterelementreihe sowie die Druckluftquelle 9 mit dem die Absperreinrichtung 11 durchsetzenden, über das Ventil 10 mit der Druckluftquelle 9 verbundenen Druckluftanschluß 15, wie dies in der Fig. 1 angedeutet ist. In der Schlittenstellung gemäß der Fig. 1 kann die oberste der Filterelementreihen gereinigt werden. Zu diesem Zweck wird die Absperreinrichtung 11 betätigt, die beispielsweise aus einem sich über die gesamte Filterelementreihe erstreckenden Verschluß 16 besteht, der mit Hilfe eines nicht dargestellten Stelltriebes dichtend an die Zwischenwand 2 angedrückt wird, womit die Strömungsverbindung zwischen den Filterelementen 5 der obersten Filterelementreihe und dem Reingasschacht 4 unterbrochen ist. Da der Druckanschluß 15 den Verschluß 16 durchsetzt und daher innerhalb der Absperreinrichtung 11 mündet, können die Filterelemente 5 der obersten Reihe durch ein Öffnen des Ventiles 10 kurzfristig mit Druckluft beaufschlagt werden.

Nach dem Reinigen der obersten Filterelementreihe wird der Schlitten 13 nach einem Öffnen der Absperreinrichtung 11 um eine Filterelementreihe weiter nach unten verschoben, um die Filterelemente 5 dieser Reihe in gleicher Weise zu reinigen. Die Filterelementreihen werden somit von oben nach unten fortschreitend vom Staub befreit, der schrittweise nach unten gefördert wird. Nach dem Abblasen der Filterelemente 5 der untersten Filterelementreihe wird der Schlitten 13 in eine Wartestellung unterhalb der untersten Filterelementreihe abgesenkt, um den Filterbetrieb nicht zu beeinträchtigen. Der Reingasschacht 4 ist hiefür zu einem Aufnahmeraum 17 für den Schlitten 13 nach unten erweitert.

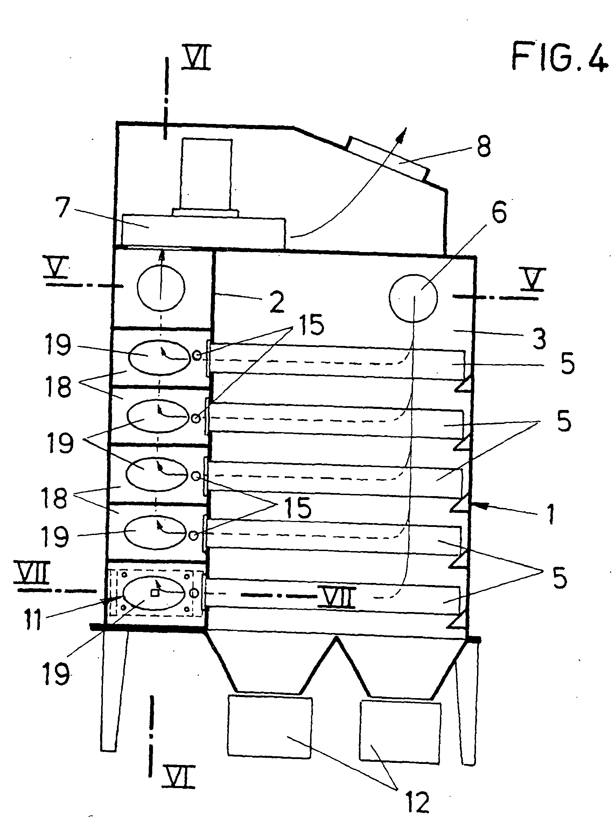

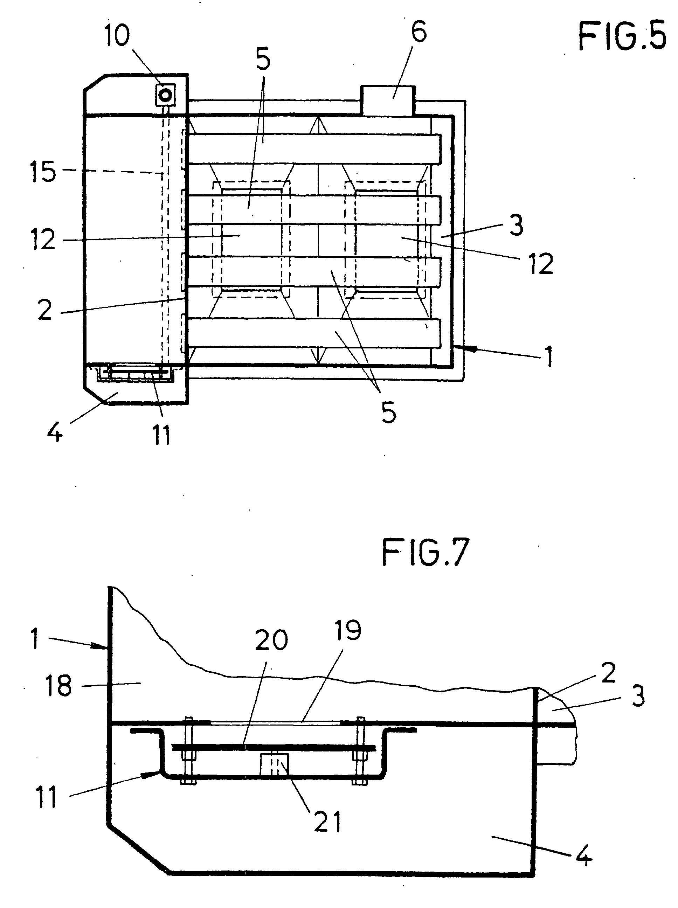

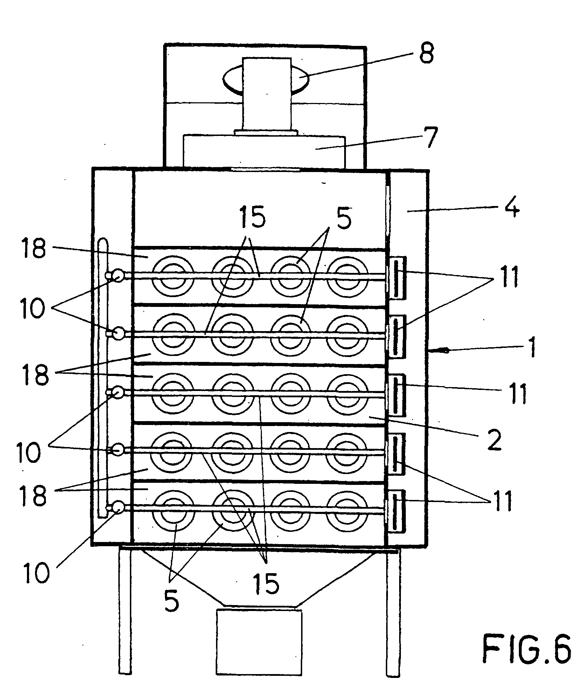

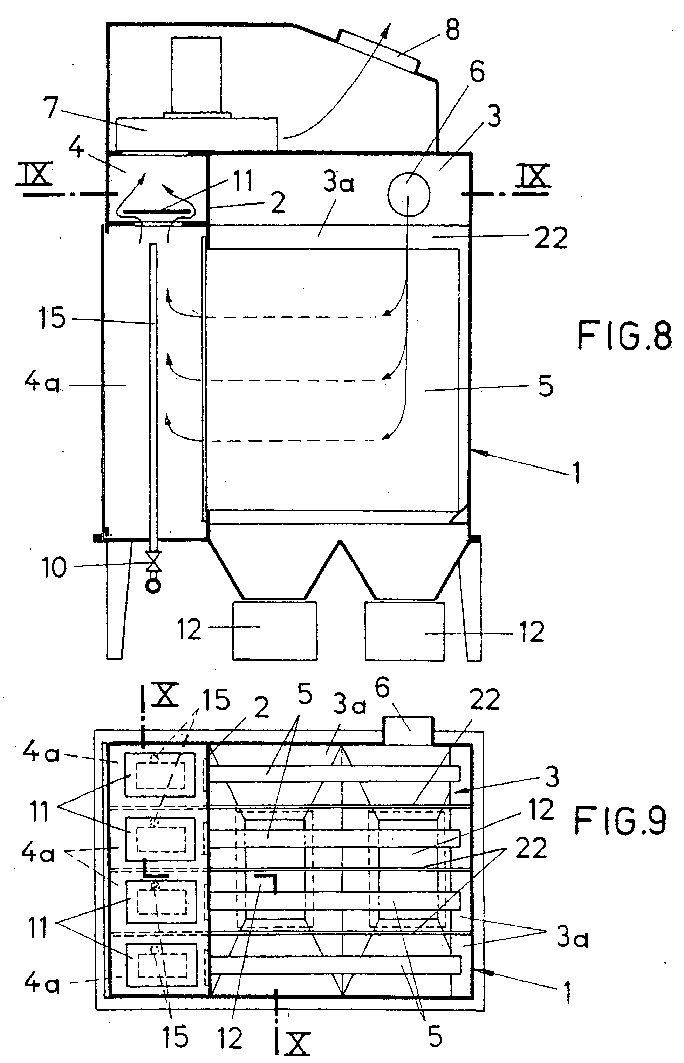

Bei der Ausführungsform nach den Fig. 4 bis 7 ist die reihenweise Reinigung der Filterelemente 5 in anderer Weise gelöst. Die Filterelemente 5 einer Reihe münden nämlich nicht unmittelbar in einen an die Zwischenwand 2 anschließenden Reingasschacht, sondern in jeder Filterelementreihe zugehörige Sammelkanäle 18, die stirnseitig an den Reingasschacht 4 anschließen, und zwar über je eine Absperreinrichtung 11. Diese Absperreinrichtungen 11 bestehen gemäß der Fig. 7 aus einem die Durchtrittsöffnungen 19 zwischen dem Sammelkanal 18 und dem Reingasschacht 4 abdeckenden Verschluß 20, der mit Hilfe eines Stelltriebes 21, beispielsweise eines Elektromagneten, an die Durchtrittsöffnung 19 dichtend angedrückt werden kann. Den einzelnen Sammelkanälen 18 muß außerdem je ein über ein Ventil 10 ansteuerbarer Druckluftanschluß 15 zugeordnet werden, um den Sammelkanal 18 und die an ihn angeschlossenen Filterelemente 5 über das Ventil 10 mit einer Druckluftquelle verbinden zu können.

Die Wirkungsweise des Staubabscheiders gemäß dem Ausführungsbeispiel nach den Fig. 4 bis 7 entspricht dem der Fig. 1 bis 3. Für die Filterreinigung wird zunächts der Sammelkanal 18 für die oberste Filterelementreihe über die diesem Sammelkanal 18 zugehörige Absperreinrichtung 11 vom Reingasschacht 4 getrennt, bevor über das zugehörige Ventil 10 und den Druckluftanschluß 15 eine kurzzeitige Druckluftbeaufschlagung der an diesen Sammelkanal 18 angeschlossenen Filterelemente 5 erfolgt. Nach dem Abblasen der Staubteilchen von den Filterelementen 5 der obersten Filterelementreihe wird der oberste Sammelkanal 18 wieder an den Reingasschacht angeschlossen und die Absperreinrichtung 11 des darunter angeordneten Sammelkanales 18 betätigt, um wieder die Filterelementreihen von oben nach unten fortschreitend zu reinigen, indem nacheinander die Absperreinrichtungen 11 bzw. die Ventile 10 der Sammelkanäle 18 über eine entsprechende Steuereinrichtung einzeln angesteuert werden. Der abgeblasene Staub wird in Staubsammelbehältern 12 aufgefangen.

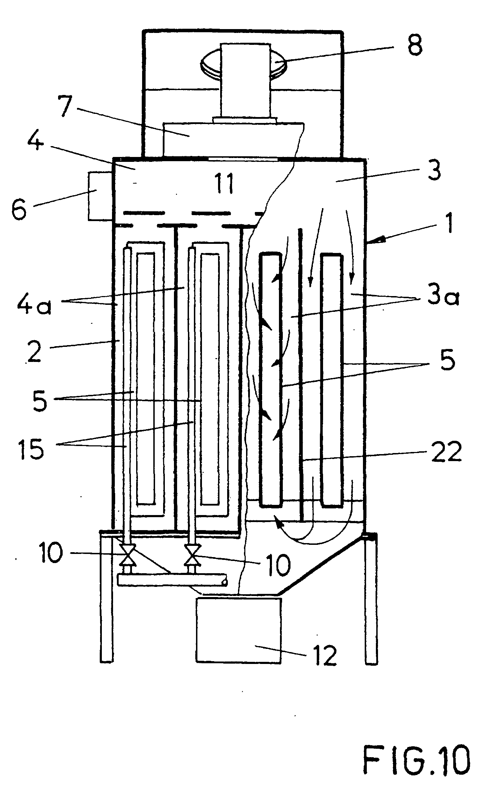

Im Ausführungsbeispiel nach den Fig. 8 bis 10 werden keine Filterpatronen, sondern plattenförmige Filterelemente 5 in die Zwischenwand 2 zwischen dem Rohgasschacht 3 und dem Reingasschacht 4 eingesetzt. Der Rohgasschacht 3 wird dabei durch Trennwände 22 zwischen den Filterelementen 5 in diesen Filterelementen 5 zugehörige Strömungskanäle 3a unterteilt, die oben und unten offen sind, wie dies insbesondere der Fig. 10 entnommen werden kann. Dementsprechend ist auch der Reingasschacht 4 in den einzelnen Filterelementen 5 zugehörige Reingaskanäle 4a unterteilt, die über je eine Absperreinrichtung 11 an den gemeinsamen Reingasschacht 4 angeschlossen sind. Da außerdem die Reingaskanäle 4a über Druckluftanschlüsse 15 und Steuerventile 10 von einer Druckluftquelle her einzeln mit Druckluft beaufschlagt werden können, ist wiederum eine Druckluftbeaufschlagung der Filterelemente 5 während des Verschlusses der Strömungsverbindung zwischen dem jeweiligen Filterelement 5 und dem Reingasschacht 4 möglich. Zu diesem Zweck braucht lediglich die Absperreinrichtung 11 des zu reinigenden Filterelementes 5 betätigt und das Ventil 10 für den Druckluftanschluß 15 geöffnet zu werden, so daß die damit verbundene Druckbeaufschlagung des Filterelementes 5 ein Abblasen der Staubteilchen von den Filterflächen dieses Filterelementes 5 bewirkt. Obwohl die. Strömung des Rohgases durch das abgesperrte Filterelement 5 verhindert wird, stellt sich innerhalb des Strömungskanales 3a des abgesperrten Filterelementes 5 eine von oben nach unten gerichtete Rohgasströmung ein, weil die Strömungskanäle 3a unten miteinander in Strömungsverbindung stehen, so daß der Druckabfall in den dem abgesperrten Filterelement 5 benachbarten Strömungskanälen 3a auf den Strömungskanal 3a des abgesperrten Filterelementes 5 durchgreift und eine entsprechende Rohgasströmung entlang des abgesperrten Filterelementes 5 nach sich zieht, wie dies für das äußerst rechte Filterelement 5 in der Fig. 10 durch entsprechende Strömungspfeile angedeutet wurde. Über diese Rohgasströmung werden die abgeblasenen Staubteilchen nach unten zu den Staubsammelbehältern 12 gefördert.

Es braucht wohl nicht besonders hervorgehoben zu werden, daß das aufeinanderfolgende Absperren der nebeneinandergereihten Filterelemente 5 und deren Druckbeaufschlagung auch über einen Schlitten ähnlich dem Ausführungsbeispiel nach den Fig. 1 bis 3 durchgeführt werden kann. Der Schlitten muß allerdings in horizontaler Richtung entlang der Filterelementreihe von Filterelement 5 zu Filterelement 5 verstellt werden.

## Patentansprüche

1. Verfahren zum Reinigen eines Staubabscheiders, der einen von oben nach unten durchströmten Rohgasschacht und quer zur Rohgasströmung in den Rohgasschacht ragende Fitterelemente aufweist, durch die das Rohgas unter einer entsprechenden Staubabscheidung in einen Reingasschacht abgeleitet wird und die nacheinander zum Abblasen der auf ihnen abgesetzten Staubteilchen in den Rohgasschacht kurzzeitig mit Druckluft beaufschlagt werden, wobei während der Druckluftbeaufschlagung der Filterelemente deren Strömungsverbindung zum Reingasschacht unterbrochen wird, **dadurch gekennzeichnet, daß** während der Unterbrechung der Strömungsverbindung zwischen den zu reinigenden Filterelementen und dem Reingasschacht die vom Reingasschacht abgesperrten Filterelemente vom eine von oben nach unten gerichtete Strömungskomponente aufweisenden Rohgasstrom umströmt werden.

2. Verfahren nach Anspruch 1, **dadurch gekennzeichnet, daß** bei einer Anordnung der Filterelemente zumindest gruppenweise übereinander die Filterelemente nacheinander von oben nach unten mit Druckluft beaufschlagt werden.

3. Verfahren nach Anspruch 1, **dadurch gekennzeichnet, daß** bei einer Nebeneinanderreihung der Filterelemente der Rohgasstrom durch Trennwände zwischen den Filterelementen in den Filterelementen zumindest gruppenweise zugeordnete Teilströme unterteilt wird.

4. Verfahren nach einem der Ansprüche 1 bis 3, **dadurch gekennzeichnet, daß** während der Unterbrechung der Strömungsverbindung zwischen den Filterelementen und dem Reingasschacht die Filterelemente mit wenigstens zwei aufeinanderfolgenden Druckluftimpulsen beaufschlagt werden.

5. Staubabscheider zur Durchführung des Verfahrens nach einem der Anpsrüche 1 bis 4 mit einem oben einen Rohgasanschluß (6) aufweisenden Rohgasschacht (3), in den quer zur Rohgasströmung angeordnete Filterelemente (5) ragen, die an einen mit einem Sauggebläse (7) verbundenen Reingasschacht (4) angeschlossen sind, mit einer Druckluftquelle (9) zur gruppenweisen Versorgung der Filterelemente (5) mit Druckluftimpulsen, mit wenigstens einer Absperreinrichtung (11) zum aufeinanderfolgenden Verschließen der Strömungsanschlüsse der Filterelementgruppen an den Reingasschacht (4) und mit wenigstens einem Ventil (10) für den Anschluß der Filterelemente (5) an die Druckluftquelle (9), **dadurch gekennzeichnet, daß** die Filterelementgruppen übereinander angeordnet sind.

6. Staubabscheider zur Durchführung des Verfahrens nach einem der Ansprüche 1 bis 4 mit einem oben einen Rohgasanschluß (6) aufweisenden Rohgasschacht (3), in den quer zur Rohgasströmung angeordnete Filterelemente (5) ragen, die an einen mit einem Sauggebläse (7) verbundenen Reingasschacht (4) angeschlossen sind, mit einer Druckluftquelle (9) zur Versorgung der Filterelemente (5) mit Druckluftimpulsen, mit wenigstens einer Absperreinrichtung (11) zum aufeinanderfolgenden Verschließen der Strömungsanschlüsse der Filterelemente (5) an den Reingasschacht (4) und mit wenigstens einem Ventil (10) für den Anschluß der Filterelemente (5) an die Druckluftquelle (9), **dadurch gekennzeichnet, daß** im Rohgasschacht (3) die Filterelemente (5) nebeneinandergereiht sind und daß der Rohgasschacht (3) durch Trennwände (22) zumindest zwischen Filterelementgruppen in oben und unten offene Strömungskanäle (3a) unterteilt ist.

7. Staubabscheider nach Anspruch 5 oder 6, **dadurch gekennzeichnet, daß** die zu Gruppen zusammengefaßten Filterelemente (5) gruppenweise in einen Sammelkanal (18) münden, der einerseits über eine Absperreinrichtung (11) an den Reingasschacht (4) und anderseits über ein Ventil (10) an die Druckluftquelle (9) angeschlossen ist.

8. Staubabscheider nach einem Anspruch 5 oder 6, **dadurch gekennzeichnet, daß** den Filterelementen (5) bzw. den Filterelementgruppen ein im Reingasschacht (4) geführter, von Filterelement (5) zu Filterelement (5) bzw. von Filterelementgruppe zu Filterelementgruppe verlagerbarer Schlitten (13) zugeordnet ist, der eine anstellbare Absperreinrichtung (11) für ein Filterelement (5) bzw. eine Filterelementgruppe und einen über ein Ventil (10) steuerbaren, innerhalb der Absperreinrichtung (11) mündenden Druckluftanschluß (15) für die Druckluftquelle (9) aufweist.

9. Staubabscheider nach einem der Ansprüche 5 bis 8, **dadurch gekennzeichnet, daß** dem Rohgasschacht (3) wenigstens ein in Abhängigkeit von der Betätigung der Absperreinrichtung (11) einschaltbares Gebläse für den Rohgasstrom zugeordnet ist.

## Claims

1. A method of cleaning a dust separator comprising an untreated gas shaft with a downward flow and filter elements projecting into the untreated gas shaft transversely of the untreated gas flow, through which filter elements the untreated gas is deflected, with corresponding dust separation, into a clean gas shaft and which filter elements are briefly subjected to compressed air successively for the purpose of blowing off into the untreated gas shaft the dust particles deposited on said filter elements, the filter element flow connection to the clean gas shaft being interrupted during the compressed air actuation, **characterised in that** during the interruption of the flow connection between the filter elements for cleaning and the clean gas shaft an untreated gas flow having downwardly directed flow components flows around the filter elements shut off from the clean gas shaft.

2. A method according to claim 1, **characterised in that** where the filter elements are disposed at least in groups one above the other the filter elements are subjected to the action of compressed air downwardly in succession.

3. A method according to claim 1, **characterised in that** where the filter elements are arranged side by side the untreated gas flow is divided up by partitions between the filter elements into sub-flows associated with the filter elements at least in groups.

4. A method according to any one of claims 1 to 3, **characterised in that** during the interruption of the flow connection between the filter elements and the clean gas shaft the filter elements are subjected to at least two successive compressed air pulses.

5. A dust separator for performing the method according to any one of claims 1 to 4, with an untreated gas shaft (3) having an untreated gas connection (6) at the top, into which shaft (3) there project filter elements (5) which are disposed transversely of the untreated gas flow and which are connected to a clean gas shaft (4) connected to a suction fan (7), with a compressed air source (9) for supplying the filter elements (5) with compressed air pulses in groups, with at least one shut-off device (11) for successively closing the flow connections between the filter element groups and the clean gas shaft (4) and with at least one valve (10) for the connection of the filter elements (5) to the compressed air source (9), **characterised in that** the filter element groups are disposed one above the other.

6. A dust separator for performing the method according to any one of claims 1 to 4, with an untreated gas shaft (3) having an untreated gas connection (6) at the top, into which shaft (3) there project filter elements (5) which are disposed transversely of the untreated gas flow and which are connected to a clean gas shaft (4) connected to a suction fan (7), with a compressed air source (9) for supplying the filter elements (5) with compressed air pulses, with at least one shut-off device (11) for successively closing the flow connections between the filter elements (5) and the clean gas shaft (4) and with at least one valve (10) for the connection of the filter elements (5) to the compressed air source (9), **characterised in that** the filter elements (5) are arranged side by side in the untreated gas shaft (3) and **in that** the untreated gas shaft (3) is divided up by partitions (22) at least between filter element groups into flow channels (3a) open top and bottom.

7. A dust separator according to claim 5 or 6, **characterised in that** the filter elements (5) combined into groups lead in groups into a collecting channel (8) which is connected on the one hand to the clean gas shaft (4) via a shut-off device (11) and on the other hand to the compressed air source (9) via a valve (10).

8. A dust separator according to claim 5 or 6, **characterised in that** associated with the filter elements (5) or filter elements group is a slide (13) guided in the clean gas shaft (4) and movable from filter element (5) to filter element (5) or from filter element group to filter element group, said slide having an adjustable shut-off device (11) for a filter element (5) or a filter element group and a compressed air connection (15) for the compressed air source (9), said compressed air connection being controllable via a valve (10) and opening inside the shut-off device (11).

9. A dust separator according to any one of claims 5 to 8, **characterised in that** at least one fan for the untreated gas flow is associated with the untreated gas shaft (3), said fan being adapted to be switched on in dependence on the actuation of the shut-off device (11).

## Revendications

1. Procédé de nettoyage d'un séparateur à poussière, présentant un puits à gaz bruts, traversé du haut vers le bas par un écoulement, et des éléments filtrants, pénétrant transversalement par rapport à la direction des gaz bruts dans le puits à gaz bruts, éléments au moyen desquels les gaz bruts sont déviés en procédant à une séparation de la poussière correspondante, pour passer dans un puits à gaz purs et qui sont sollicités les uns après les autres par de l'air comprimé, sur une courte durée, pour évacuer par soufflage les particules de poussière déposées sur eux dans le puits à gaz bruts, sachant que, pendant l'exposition des éléments filtrants à de l'air comprimé, leur liaison d'écoulement envers le puits à gaz purs est interrompu, **caractérisé en ce que**, pendant l'interruption de la liaison d'écoulement, entre les éléments filtrants à nettoyer et le puits à gaz purs, les éléments filtrants isolés du puits à gaz purs sont balayés extérieurement par un flux de gaz bruts présentant une composante d'écoulement orientée du haut vers le bas.

2. Procédé selon la revendication 1, **caractérisé en ce qu'**en cas d'agencement des éléments filtrants au moins par groupes les uns au dessus des autres, les éléments filtrants sont sollicités les uns après les autres, du haut vers le bas, par de l'air comprimé.

3. Procédé selon la revendication 1, **caractérisé en ce qu'**en cas d'alignement les uns à côtés des autres des éléments filtrants, l'écoulement de gaz bruts est subdivisé, au moyen de parois de séparation placées entre les éléments filtrants, en des écoulements partiels associés, au moins par groupes, aux éléments filtrants.

4. Procédé selon l'une des revendications 1 à 3, **caractérisé en ce que**, pendant l'interruption de la liaison d'écoulement entre les éléments filtrants et le puits à gaz purs, les éléments filtrants sont sollicités par au moins deux impulsions de pression se suivant.

5. Séparateur à poussière pour mettre en oeuvre le procédé selon l'une des revendications 1 à 4, avec un puits à gaz bruts (3) présentant en partie haute un raccordement de gaz bruts (6), puits dans lequel pénètrent les éléments filtrants (5) disposés transversalement par rapport à l'écoulement de gaz bruts, éléments filtrants qui sont raccordés à un puits à gaz purs (4) relié à une soufflante d'aspiration (7), avec une source d'air comprimé (9) pour alimenter par groupes les éléments filtrants (5) par des impulsions d'air comprimé, avec au moins un dispositif d'isolement (11) pour fermer de façon successive les raccordements d'écoulement des groupes d'éléments filtrants au puits de gaz pur (4) et avec au moins une soupape (10) pour le raccordement des éléments filtrants (5) à la source d'air comprimé (9), **caractérisé en ce que** les groupes d'éléments filtrants sont disposés les uns au dessus des autres.

6. Séparateur à poussière pour la mise en oeuvre du procédé selon l'une des revendications 1 à 4, avec un puits à gaz bruts (3) présentant, en partie haute, un raccordement de gaz bruts (6), puits dans lequel pénètrent des éléments filtrants (5) disposés transversalement par rapport à l'écoulement de gaz bruts, éléments filtrants raccordés à un puits à gaz purs (4) relié à une soufflante d'aspiration (7), avec une source d'air comprimé (9) pour l'alimentation des éléments filtrants (5) par des impulsions d'air comprimé, avec au moins un dispositif d'isolement (11) pour la fermeture successive des raccordements d'écoulement des éléments filtrants (5) sur le puits à gaz purs (4), et avec au moins une soupape (10) pour le raccordement des éléments filtrants (5) à la source d'air comprimé (9), **caractérisé en ce que**, dans le puits à gaz bruts (3), les éléments filtrants sont alignés en rangées les uns à côté des autres, et **en ce que** le puits à gaz bruts (3) est subdivisé, à l'aide de parois de séparation (22) placés au moins entre des groupes d'éléments filtrants, en des canaux d'écoulement (3a) ouverts en partie haute et en partie basse.

7. Séparateur à poussière selon la revendication 5 ou 6, **caractérisé en ce que** les éléments filtrants (5), regroupés en groupes, débouchent par groupes dans un canal collecteur (18) qui, d'une part, est raccordé par un dispositif d'isolement (11) au puits à gaz purs (4) et est raccordé, d'autre part, par une soupape (10) à la source d'air comprimé (9).

8. Séparateur à poussière selon la revendication 5 ou 6, **caractérisé en ce que**, aux éléments filtrants (5) ou aux groupes d'éléments filtrants, est associé un chariot (13), guidé dans le puits à gaz purs (4), déplaçable d'un élément filtrant (5) à un autre élément filtrant (5), ou d'un groupe d'éléments filtrants à un autre groupe d'éléments filtrants, chariot présentant un dispositif d'isolement (11) susceptible d'être plaqué, pour un élément filtrant (5) ou un groupe d'élément filtrant et un raccordement d'air comprimé (15), pour la source d'air comprimé (9), pouvant être commandé par une soupape (10), débouchant à l'intérieur du dispositif d'isolement (11).

9. Séparateur à poussière selon l'une des revendications 5 à 8, **caractérisé en ce qu'**au moins une soufflante, susceptible d'être mise en oeuvre en fonction de l'actionnement du dispositif d'isolement (11), est associée au puits à gaz bruts (3) pour le flux de gaz bruts.
